# EUROPEAN PATENT SPECIFICATION

(11) **EP 2 453 382 B1**
(45) Date of publication and mention of the grant of the patent: **17.12.2014**
(21) Application number: 11188639.6
(22) Date of filing: 10.11.2011
(51) Int. Cl.: G06K 7/14, G06K 7/12

(54) **Method and device for barcode scanning with colour image sensors**
Verfahren und Vorrichtung zum Strichcodescannen mit Farbbildsensoren
Procédé et dispositif pour la lecture de codes-barres avec des capteurs d'images couleur

(30) Priority: 11.11.2010 US 944356; 11.11.2010 US 944327
(43) Date of publication of application: 16.05.2012
(73) Proprietor: Psion Inc., Mississauga, ON L5N 7J9 (CA)
(72) Inventor: Zolotov, Serguei, Mississauga, Ontario L5N 7J9 (CA)
(74) Representative: Treleven, Colin

(56) References cited:
- EP-A1- 2 093 695
- JP-A- 2004 080 079
- US-A1- 2008 029 602

## Description

The present invention relates generally to a method and device for barcode scanning. More specifically, the present invention relates to a method and device for scanning barcodes with colour image sensors.

As is known in the art, linear (1D) and 2D barcodes are widely employed in a variety of applications including coding of manufacturer's product information on products such as groceries, books, car parts and a wide variety of other merchandise. Additionally, barcodes have been used for tracking purposes in logistics systems, such as to track the movement of cargo containers, rental cars, airline luggage, mail and warehouse contents.

Conventionally, most current barcode scanners or readers are designed for use with black and white barcode systems and thus employ grey scale imagers to capture image of the codes for subsequent decoding. While such systems have been widely deployed with much success, imaging sensor technology is now largely driven by the demands of the consumer market. Accordingly, the majority of image sensor research and development is directed to colour sensors which have continually increasing resolutions and greater light level sensitivities. The development of grey scale imagers has, and continues to, lag that of colour sensors.

One way to address this issue has been to employ a colour imager sensor and to design barcode decoding algorithms that process those images directly. However, this is not feasible for many uses, as such direct colour barcode decoders are computationally intensive and expensive for current mass market use. Additionally, redesign of current greyscale barcode decoders to provide colour barcode decoding is not feasible as it is expensive in terms of labour and time.

Accordingly, it is desirable to provide a solution for barcode scanning with a colour image sensor that obviates or mitigates at least some of the above mentioned disadvantages.

JP-A-2004080079 (Sharp Corp) provides an image recognition processing apparatus. Image data of a bar code is photographed by a camera mechanism. The image data is converted into two types of different data format. A signal is extracted from the image data in one of the formats. A CPU reads the image data and recognises the image based on the signal. The image is then displayed. Shorter processing times are achieved.

### SUMMARY OF THE INVENTION

In accordance with the invention, a method comprising the steps of appended independent claim 1 is provided. Also in accordance with the invention, a computing device comprising the features of appended independent claim 8 is provided. The dependent claims provide details of embodiments of the invention.

Embodiments of the present invention will now be described by way of example only with reference to the following drawings in which:
Figure 1 shows a computing device including an illustrative colour image sensor for barcode scanning in accordance with the present invention;
Figure 2 is a schematic representation of components and functional subsystems of the computing device of Figure 1;
Figure 3 shows a flowchart of a barcode scanning process, in accordance with one embodiment of the present invention;
Figure 4 is a schematic representation of the components and functional subsystems of another embodiment of the computing device of Figure 1;
Figure 5a shows a flowchart of an image calibration engine of the embodiment of Figure 4;
Figure 5b shows a flowchart of a barcode scanning process in accordance with the embodiment of Figures 4; and
Figure 6 shows an example diagram of spectral sensitivities for a particular colour image sensor.

As known in the art, barcode scanners were originally limited to use with 1 D (or linear) barcodes and decoded the barcode by scanning a laser across the linear barcode and processing the light absorbed by and/or bounced off the barcode symbols to decode the barcode.

More recently, 2D (matrix) barcodes have become common and decoding 2D barcodes typically requires that an image of the target barcode be acquired and provided to a suitable decoder. By employing a suitable decoder, a 2D barcode reader can also process an acquired image of a 1 D barcode to decode it too. Accordingly, barcode readers which can process a 2D barcode can also decode a 1 D barcode. Further, some manufacturers also manufacture barcode readers which can only process 1 D barcodes, but do so with an image sensor and suitable decoder, rather than with a laser scanner.

Accordingly, as used herein, the terms barcode reader or barcode scanner are intended to refer to devices for reading and decoding 1 D or 2D barcodes from images of those barcodes captured with a colour image sensor such as a CCD (charge coupled device), CMOS image sensor or the like.

As discussed earlier, to design colour barcode decoders for use with colour image sensors has not been commercially feasible due to their cost and complexity. Further, existing barcode decoders are typically only made available by their creators in executable (object code) formats and thus cannot easily be modified or reprogrammed by manufacturers of computing devices to accept colour images.

The present invention relates to a method and system for barcode scanning of colour images, as captured by one or more colour image sensors, wherein the captured images are processed via greyscale barcode decoders, including conventional greyscale barcode decoders. As will be described herein, the colour images are converted into a greyscale image suitable for subsequent processing with a greyscale barcode decoder.

It is noted that as used herein, the term "computing device" is intended to include a wide range of digital devices including, without limitation, devices which generate digital information, such as computer terminals, optical scanning devices including dedicated barcode scanners, digital photo and document scanners, etc. Accordingly, computing devices can include fixed and/or portable devices such as mobile computers, mobile phones, handheld terminals, digital cameras, scanners, other electronic devices configured to read and process barcode images.

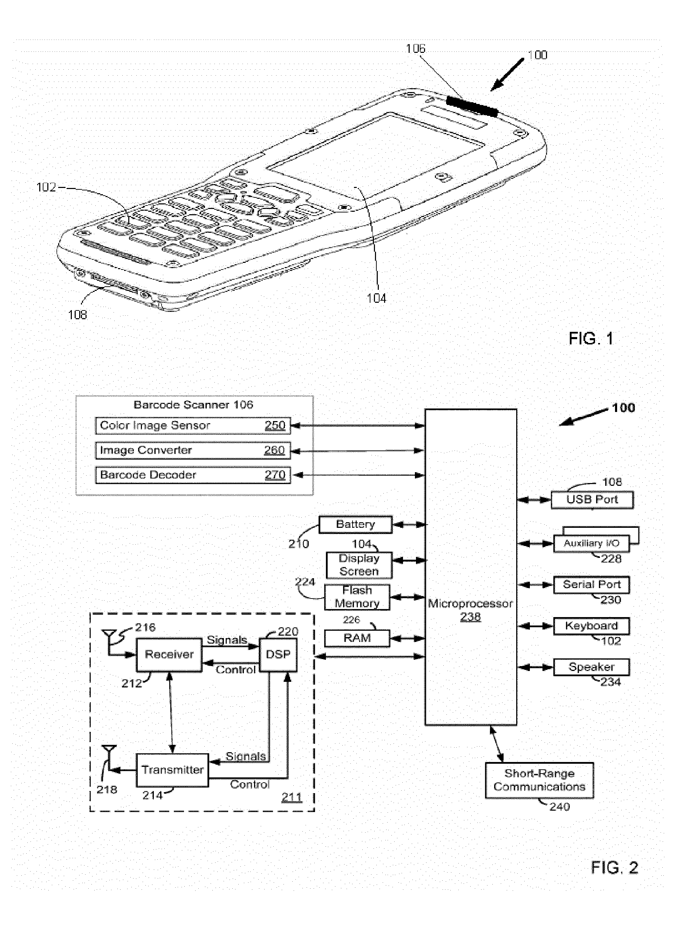

Referring now to Figures 1 and 2, a computing device is indicated generally at 100. Computing device 100 may include a keyboard 102 for user input, a display screen 104, and a barcode scanner 106 for optical barcode scanning functionality and an expansion port 108. Barcode scanner 106, described in further detail below, may comprise a set of hardware, firmware, and system software, employed in any suitable combination thereof, to accomplish barcode decoding using a colour image sensor 250 for processing captured colour images of target barcodes. Colour image sensor 250 can be any suitable semiconductor-based sensor, such as a CCD or CMOS sensor which can be used to capture a colour image comprising a series of picture elements (pixels).

As will be described below, barcode scanner 106 uses a colour to grey scale transformation of a scanned or otherwise captured colour image (as obtained from colour image sensor 250) to decode the image by using a greyscale image based decoder. The greyscale image based decoder may be a standard greyscale decoder as used in the art for decoding greyscale images of target barcodes. Expansion port 108 may be any suitable interface port, such as a Universal Serial Bus (USB) port or other similar expansion port for coupling compatible peripheral devices, such as, but not limited to, a communication and synchronization cradle for the handheld device. It is contemplated that, in some embodiments, colour image sensor 250 and barcode scanner 106 could be provided in a separate, handheld enclosure and coupled to computing device 100 via expansion port 108.

As used herein, the term barcode refers to an optical machine-readable representation of data. Linear or 1D (1 dimensional) barcodes or symbologies represent data in the widths and the spacings of parallel lines. Matrix or 2D (2 dimensional) barcodes or symbologies comprise patterns of squares, dots, hexagons and other geometric patterns which encode the data represented be the barcode and even though 2D systems use symbols other than bars, they are generally referred to as barcodes. The barcode images discussed herein for use with barcode scanner 106 can refer to either 1 D or 2D barcodes.

Figure 2 illustrates a block diagram of an exemplary architecture of the functional subsystems of computing device 100. Computing device 100, which can be a handheld device, can have the capability of communicating at least data, and possibly any of data, audio and voice communications, to and from devices within a communication network.

Computing device 100 can include wired or wireless communication capability. In the wireless configuration, the computing device 100 typically includes radio frequency (RF) communication subsystem 211, which includes a receiver 212, a transmitter 214, and associated components, such as one or more embedded or internal antenna elements 216 and 218, and a processing module such as a digital signal processor (DSP) 220. As will be apparent to those skilled in field of communications, the particular design of RF communication subsystem 211 depends on the specific communication network or networks in which computing device 100 is intended to operate, but can include communication functionalities such as Wi-Fi WLAN based on IEEE 802.11 standards, cellular data standards such as GPRS, EDGE, LTE or other protocols/systems such as Zigbee, Z-Wave and the like.

Computing device 100 includes a microprocessor 238 which controls general operation of computing device 100. Microprocessor 238 also interacts with functional device subsystems, such as a display screen module 104, a flash memory 224, random access memory (RAM) 226, auxiliary input/output (I/O) subsystems 228, serial port 230, keyboard module 102, speaker 234, short-range communications subsystem 240, such as Bluetooth™ for example, and expansion port 108 for peripherals. Computing device 100 may include a power source such as battery module 210 which may also be removable and replaceable from computing device 100.

Still with regard to Figure 2, operating system software used by microprocessor 238 may be stored in a persistent store such as flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

Microprocessor 238, in addition to its operating system functions, enables execution of software applications on computing device 100. A predetermined set of applications, which control basic device operations, or even more customized, advanced device operations, may be installed on computing device 100 during its manufacture, such as during the components configuration process described herein.

As will be apparent to those skilled in field of communications, the particular design of communication subsystem 211 depends on the communication network in which computing device 100 is intended to operate, and may include various communication functionalities as will be understood by a person skilled in the art.

Display screen module 104 of computing device 100 may be used to visually present a software application's graphical user interface (GUI) to a user via a display screen. Display screen module 104 may employ a touch screen display, in which case the user can manipulate application data by modifying information on the GUI using direct touches by a finger or stylus. Depending on the type of computing device 100, the user may have access to other types of input devices, such as, for example, a scroll wheel, trackball or light pen.

A graphical user interface presented at display screen module 104 of computing device 100 may enable an operator or administrator to interact therewith. It further contemplated that computing device 100 may be communicatively coupled to a remotely located database (not shown).

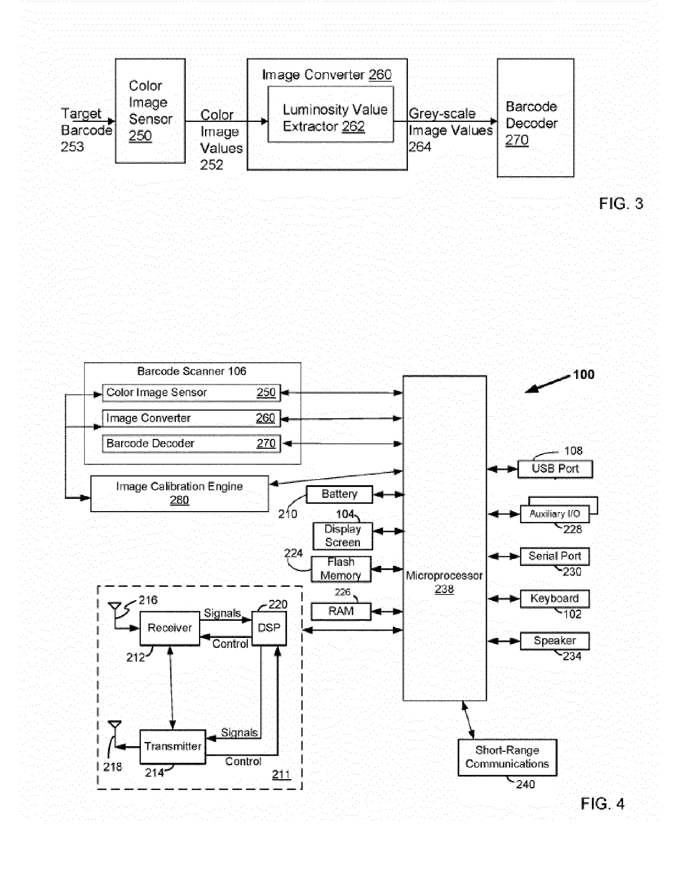

Computing device 100 further comprises barcode scanner 106. Barcode scanner 106 can comprise any suitable combination of software, firmware and hardware for implementing scanning of a target barcode 253 (see Figure 3) with colour image sensor 250 via greyscale barcode decoding technique by converting obtained or captured colour images of the target barcode 253 to greyscale images for subsequent processing by greyscale barcode decoder 270.

Barcode scanner 106 comprises a colour image sensor 250, an image converter 260 and a barcode decoder 270. Barcode scanner 106 can further include a light source and a lens (not shown) for cooperating with colour image sensor 250 to capture an image of target barcode 253.

It is noted that although a single colour image sensor 250 is discussed herein, colour image sensor 250 may comprise a number of sensors as may be needed to capture and process an image of target barcode 253. For example, in one embodiment, different colour image sensors 250 may be used to process 1 D, or 2D barcodes respectively. In another embodiment, a number of colour image sensors 250 may be used simultaneously to scan the target barcode 253 and provide RGB values and/or YUV values as desired. In yet another embodiment, a number of colour image sensors 250 may be used such that each may be better suited for providing a particular type of colour schemes (e.g. RGB or YUV or Bayer format, as predefined) of target barcode 253.

Barcode scanner 106 processes a particular barcode by capturing a colour image of target barcode 253 and measuring the intensity of the light reflected back via colour image sensor 250. Accordingly, colour image sensor 250 is adapted to produce a digital representation of the captured image of target barcode 253. The colour image sensor 250 may be configured to provide an RGB image representation and/or a YUV image representation for subsequent input to image converter 260.

In one embodiment, a particular colour can be represented as the combination of three primary colours red, green and blue provided in certain predefined quantities as per the RGB colour format.

Accordingly, in the present embodiment any colour may be represented by the amount of Red, Green and Blue colours that it includes. This combination of primary colours is also often referred to as RGB values. For example, within images such as BMP, JPEG and PDF formats, each pixel of the image is represented with values for each of Red, Green and Blue quantities. As is known in the art, other colour spaces exist, such as CMYK which uses four colour values to define each pixel/colour. In an RGB colour space embodiment of the present invention, colour image sensor 250 is configured to provide an output representing each of the amount of intensity or hue of red, green and blue for the particular single colour sensed by colour image sensor 250 of the target barcode.

As described earlier, colour image sensor 250 is configured to capture a colour image of a target barcode 253 and to create a set of digital electrical signals representing an image of the imaged target barcode 253 (e.g. colour image values 252). As will be described, colour image sensor 250 is designed to measure the intensity of light reflected from an image being sensed (e.g. target barcode 253) and to generate a digital representation of same. In many circumstances a light source may be provided on barcode scanner 106 to illuminate the target barcode 253, but in other circumstances ambient lighting can be sufficient to illuminate the target barcode 253 and barcode scanner 106 can omit a light source . It is further noted that the combination of colour image sensor 250, a lens and one or more light sources, if present, may be part of a camera such as a digital still camera and/or a video camera for use with the present invention.

Light, whether from a supplied light source or ambient lighting, reflects on the target barcode 253 and is focussed by one or more lenses in barcode scanner 106 onto colour image sensor 250. As described herein, in one embodiment, colour image sensor 250 then produces three output voltages which are digitized and indicate quantities for each of the red, blue and green respectively (also referred to as RGB values). In one embodiment, colour image sensor 250 may be configured to provide digital YUV image values from the RGB values detected. In another embodiment, colour image sensor 250 provides digital values from any one of HSC (Hue, Saturation, Colour), CMYK, CMY, Bayer format or other colour space formats as will be envisaged by a person skilled in the art that are then converted to RGB and/or YUV colour format by one of colour image sensor 250 or image converter 260.

Typically, the YUV model defines a colour space in terms of one of a luminance or luma component (e.g. representing the brightness) as Y and U and V are the chrominance (colour components). Luminance refers to perceptual brightness while "luma" is an electronic (voltage of display) brightness. The Y value described herein can refer to either one of luminance and/or luma values.

Referring to Figures 2 and 3, in one embodiment, colour image sensor 250 may be configured to provide colour image values 252 comprising RGB and/or YUV image values 252 to image converter 260 based on a captured (i.e. - imaged) target barcode 253. Colour image values 252 can comprise any one of an array, a vector, a matrix, and/or a data stream of data values comprising the RGB or other colour space data for each pixel (picture element) of the colour image sensor 250.

In accordance with one embodiment, image converter 260 is configured to convert colour image values 252 received from colour image sensor 250 into greyscale image values 264 for subsequent use by a substantially conventional barcode decoder 270 that is configured to process greyscale images of barcodes to decode the corresponding barcode information. Image converter 260 of computing device 100 can comprise any suitable combination of software, firmware, and hardware for implementing colour image to greyscale image conversion for the greyscale barcode decoder 270.

In an embodiment where colour image sensor 250 provides RGB values, image converter 260 is further configured to perform an RGB to YUV conversion as described herein to generate YUV values for target barcode 253. Otherwise, when the colour image sensor 250 directly provides YUV values for target barcode 253, image converter 260 is configured to further decompose the YUV values and extract the Y values (i.e. for each pixel of the target barcode 253) via a luminosity value extractor 262. That is, to calculate a greyscale image equivalent of a colour image, only the Y signal needs to be communicated to barcode decoder 270.

Various suitable methods for transforming RGB signal (red, green, blue) values to YUV signal values are known and will be apparent to those skilled in the art. One known method comprises, weighting values of R, G, and B and summing them to produce a corresponding Y value, as a measure of the overall brightness or luminance.

From the YUV values of the colour image values 252, however obtained, the Y component (also referred to as the luminance component) is extracted via a luminosity value extractor 262 of image converter 260. Accordingly, greyscale image values 264 comprising luminance (also referred to as Y) values are provided to barcode decoder 270. That is, in the present embodiment, the greyscale image values 264 provide pixel values corresponding to the Y component of the colour pixels for the target barcode 253 scanned by the colour image sensor 250.

It is also contemplated that colour image sensor 250 can provide Bayer format colour values for colour image values 252 to image converter 260. Accordingly, in such an embodiment, image converter 260 is configured to convert pixel colour information from the Bayer format to RGB format as will be understood by a person skilled in the art. Once the RGB image values are obtained, conversion to YUV values and luminosity (Y) value extraction (for each pixel of the colour image values 252) occurs via luminosity value extractor 262 for subsequent processing by barcode decoder 270. In another embodiment, luminosity values may be extracted directly from Bayer format colour values by standard methods.

Referring to Figures 2 and 3, barcode decoder 270 can comprise any suitable combination of software, firmware and hardware for implementing greyscale decoding based on processing grey scale image values as received from image converter 260. That is, barcode decoder 270 is configured to combine the digital signals (e.g. greyscale image values 264) received from the image converter 260 into a series of characters that represent the barcode data. Greyscale barcode decoder 270 can comprise any suitable standard barcode decoder adapted for use with greyscale images as will be understood by a person skilled in the art.

As will now be apparent to those skilled in the art, based on the discussion above, computing device 100 uses colour image sensor 250 to image a target barcode 253 to acquire colour image values 252 representing target barcode 253. These colour image values 252 are then processed by image converter 260 (and/or luminosity value extractor 262) to obtain greyscale image values 264 that can be processed in a substantially conventional manner, by any suitable greyscale barcode decoder 270. By converting the colour image values 252 to greyscale image values 264, the need for a computationally expensive and/or difficult to implement colour barcode decoder is eliminated.

Referring now to Figure 4, computing device 100 is depicted in accordance with another embodiment of the present invention. In this embodiment, the computing device 100 comprises an image calibration engine 280 in addition to the components and functionalities depicted in Figure 2. Image calibration engine 280 can comprise any suitable combination of software, firmware and hardware for implementing static colour balancing for colour image sensor 250.

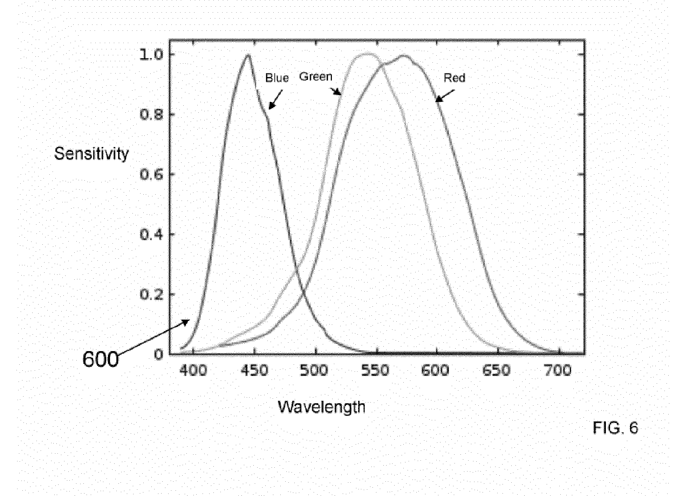

As can be understood, different colour image sensors 250 have different spectrum sensitivities as can be seen by their spectrum sensitivity curves. Referring to Figure 6, the spectrum sensitivity curves 600 for a particular colour image sensor 250 are depicted. As illustrated, different colours of the target barcode 253 will be acquired with different intensities in colour image values 252 for colour image sensor 250.

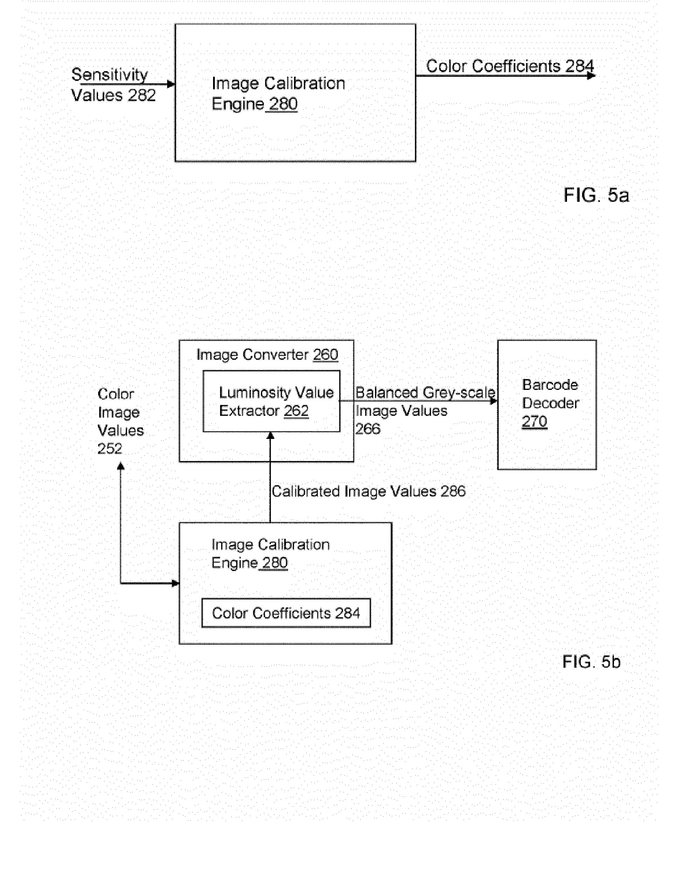

Referring to Figures 5a and 5b, image calibration engine 280 is configured to generate "colour weights" or "colour coefficients" 284 for each primary colour (red, green and blue) such as to compensate for the specific spectral sensitivities of colour image sensor 250 to obtain a colour balance.

In the embodiment depicted in Figures 5a and 5b, the colour coefficients 284 are static. That is, they are generated once and used to compensate for spectral sensitivities of colour image sensor 250 to provide colour balancing thereof for at least two captured images of at least one target barcode 253. That is, once the static colour coefficients 284 are generated via the sensitivity values 282, the same colour coefficients 284 are employed to provide calibrated image values 286 for at least two different captured images of target barcode(s) 253. As will be understood, static colour coefficients provide an advantage over coefficients that are defined at runtime based on captured images of the target barcode. Runtime or dynamically defined coefficients are typically dependent on each captured image of the target barcode 253 and are varied or adjusted based on colour values sensed from each image captured.

Referring again to Figures 5a and 5b, colour image values 252 as provided by colour image sensor 250 are communicated to image calibration engine 280. As shown in Figure 5a, image calibration engine 280 is configured to provide colour coefficients 284 in response to sensitivity values 282 associated with the particular colour image sensor 250.

That is, as described earlier, colour coefficients 284 are associated with colour image sensor 250 and once defined are applied to at least two captured images of target barcode 253 (either the same barcode or different barcodes 253). Sensitivity values 282 can comprise spectral sensitivity information associated with colour image sensor 250 for a range of predetermined wavelengths as illustrated in Figure 6 by several colour spectrum sensitivity curves. The sensitivity values 282 can be predetermined and/or obtained from colour image sensor 250 manufacturer's specification or determined empirically in any known manner. As described herein, sensitivity curves depicted in Figure 6 for defining sensitivity values 282 can be further in response to pixel colour filters, pixel light spectral sensitivity and lens spectral characteristics as associated with a particular colour image sensor 250.

In one embodiment, image calibration engine 280 determines the set of colour coefficients 284 independently of images captured via the colour image sensor 250 (e.g. independent of captured images of target barcodes 253). That is, in one aspect of the present embodiment, the colour coefficients 284 are dependent on colour image sensor's 250 pre-defined (i.e. manufacturer defined) characteristics such as spectral sensitivity values 282 (e.g. Figure 6). As is known by a person skilled in the art, colour image sensor's 250 spectral sensitivity values 282 are typically provided in colour image sensor's 250 technical specifications. That is, the sensitivity values 282 and thus the colour coefficients 284 according to the present aspect are derived independent of any images captured from colour image sensor 250. Typically, spectral sensitivity measurements are provided in optical lab environments during sensor design and prototyping or via other suitable measures as will be envisaged by a person skilled in the art. In the present aspect, exemplary methods for calculating the colour coefficients 284 in response to sensitivity values 282 are described herein.

As mentioned above, Figure 6 illustrates an exemplary graph of spectral sensitivity versus wavelength values for a particular colour image sensor 250. Each of the curves represents one of the primary colours red, green and blue. It can be seen that the spectral sensitivity distribution varies for each of the colours. Based on the spectral sensitivity curves for each of the colours, image calibration engine 280 determines a relationship between the sensitivity values for each of the primary colours (red, green and blue) for colour image sensor 250.

Based on the determined relationship between the sensitivity values which provides a measure of how sensitive colour image sensor 250 is for each of the colour spectrums, image calibration engine 280 defines colour coefficients 284 (Figure 5a). Colour coefficients 284 are used to compensate for the varying sensitivity of colour image sensor 250 for different colour spectrums such as to provide calibrated image values 286. That is, the sensitivity values 282 provide an indication of how sensitive colour image sensor 250 is to each of the red, blue and green colour spectrums. In response to the sensitivity values 282, the colour coefficients 284 provide a weighting to be applied to the colour image values 252 to generate calibrated image values 286 for compensating for colour image sensor's 250 spectral sensitivity. Accordingly, the calibrated image values 286 are the colour image values 252 weighted or multiplied by colour coefficients 284 (Figure 5b).

As described above and referring to Figure 5b, in one embodiment, image converter 260 is configured to extract luminosity values 262 or Y values from calibrated image values 286. As described earlier, if the calibrated image values 286 are in RGB format or any other colour format, they are first converted into YUV values from which the Y values or luminance values are extracted and output as balanced greyscale image values 266. As also described earlier, image values 266 are provided to barcode decoder 270 for subsequent processing and analysis.

Accordingly, based on the sensitivity values 282, the colour image values 252 (e.g. RGB image values) is processed to achieve colour balancing for colour image sensor 250 prior to calculation of the Y or luminance value being processed at image converter 260. Subsequent to extracting the Y values from the colour image values 252, balanced greyscale image values 266 are provided to greyscale barcode decoder 270 for subsequent processing thereof.

The embodiment depicted in Figure 5b provides a process for static colour balancing that can generate colour balanced images without any additional colour balancing procedures. That is, based on sensitivity values 282, colour coefficients 284 are determined once for colour image sensor 250. Subsequently, for each new barcode image provided as colour image values 252 from colour image sensor 250, previously defined colour coefficients 284 associated with colour image sensor 250 are applied to generate calibrated image values 286.

Accordingly, the present embodiment allows static colour coefficients 284 or colour weight coefficients to be selected once on computing device 100 which saves processing power and is computationally much less intense than colour balancing at run time as is currently performed.

That is, current colour balancing techniques utilizing runtime balancing which is re-performed for each new image to be decoded. Additionally, current colour balancing techniques are based on trial and error methods to constantly adjust colour coefficients to achieve colour balancing. Furthermore, the present embodiment provides static colour coefficients 284 in dependence upon sensitivity values 282 that are derived from and directly related to spectral sensitivity curves (e.g. 600 in Figure 6) for particular colour image sensor 250 of computing device 100.

Referring again to Figure 6, it is desirable that for a particular colour image sensor, the area under each of the blue, green and red spectrum curves 600 should be the same. In one embodiment, colour coefficients 284 for each colour spectrum are generated by image calibration engine 280 in dependence upon the area under each of the colour spectrum curves (e.g. red, green and blue spectrum curves).

That is, according to the present embodiment, spectral sensitivity values 282 of a particular colour image sensor 250 associated with a range of predetermined wavelengths is plotted to obtain a plurality of sensitivity curves, each curve is associated with a corresponding colour spectrum (e.g. red, green or blue) within the range of predetermined wavelengths. An example of sensitivity curves for a particular colour image sensor 250 being illustrated in Figure 6. Image calibration engine 280 is configured to determine colour coefficients 284 for each of the colour spectrums (red, green and blue) associated with colour image sensor 250 by calculating or obtaining the inverse value of the square (or area) under each of the colour sensitivity curves indicated as "Red", "Blue" and "Green". Accordingly, the inverse value of the area under each spectrum sensitivity curve provides balanced or normalized colour coefficients 284. For example, the inverse of the area under the blue spectrum curve as provided by colour coefficients 284 (in response to sensitivity values 282) is applied to the blue colour values (e.g. as defined by RGB values) of colour image values 252 obtained from colour image sensor 250. The process is repeated for each of the colour spectrums (e.g. red and green) to apply the colour coefficient 284 associated with a particular colour to the colour image values 252 associated with the same colour.

Referring again to Figure 6, it is noted that blue, green and red sensitivity curves shapes can be further dependent on colour image sensor 250 characteristics such as pixel colour filters, pixel light spectral sensitivity, and lens spectral characteristic.

Accordingly, in one scenario, sensitivity values 282 as provided from sensitivity curves (e.g. Figure 6) provide sensitivity information for colour image sensor 250 indicating that colour image sensor 250 is less sensitive to the blue colour spectrum by a predefined factor than the red or green colour spectrums (e.g. as can be seen from spectral sensitivity curves in Figure 6). Accordingly, by determining the static colour coefficients 284 from the inverse value of the area under the blue, red, and green colour spectrum curves (e.g. Figure 6), the static colour coefficients 284 provide a weighting of the predefined factor to be applied to the blue colour values of the colour image values 252 to increase the blue colour values accordingly. Alternatively, a weighting could be applied to the red and green colour values to decrease those values by the predefined factor to achieve a similar result.

As will be apparent to those of skill in the art, in most scenarios a suitable weighting is applied to at least two of the Red, Green and Blue colour values to reduce, or eliminate, the effect of the different colour sensitivities of colour image sensor 250.

In one embodiment and referring to Figures 1 to 6, the target barcode is a greyscale barcode image imaged via a colour image sensor 250.

The greyscale barcode decoder 270 comprises any suitable combination of software, firmware and hardware implementing appropriate decoder schemes for analyzing a greyscale captured image of target barcode 253, as captured by colour image sensor 250 and processed by image converter 260 (see Figures 3 and 5). The greyscale barcode decoder 270 can further send the decoded barcode image to the output of barcode scanners 106 for subsequent access by microprocessor 238 and any of the peripheral components of computing device 100 as depicted in Figures 2 and 4.

Although the embodiments described in relation to Figures 5a and 5b relate to determining the colour coefficients 284 on a static basis, that is to determine the colour coefficients in response to the sensitivity values 282 once and apply the same colour coefficients 284 to at least two different colour image values 252 associated with captured images of target barcode 253, other static and runtime methods for providing colour balancing and image calibration can be envisaged. As will be described, the image calibration engine 280 may be configured to determine the colour coefficients 284 in response to images captured by the colour image sensor 250 and their visual characteristics (e.g. colour response, colour temperature, colour spectrum values, etc...) and to dynamically or statically adjust subsequent images captured by the colour image sensor 250. In one example, the image calibration engine 280 may be configured to perform static calibration as follows. A white paper is placed in front of the colour image sensor 250 and pure white illumination is supplied to illuminate the paper. The sensed colour response for each colour as provided by the colour image sensor 250 (e.g. via colour image values 252) are measured. The colour coefficients 284 are then calculated based on the colour response for each colour as provided by colour image sensor 250. In another aspect, dynamic or runtime based colour balancing for colour image sensor 250 as provided by image calibration engine 280 employs capturing an image via colour image sensor 250, taking into account colour change edges above a certain predefined threshold, verifying that the sum of green, red and blue colour values are equal and adjusting the individual colour gain amplification or colour coefficients 284 until the sum of each of the green, red and blue colour values of the captured test image are equivalent. The colour coefficients 284 are then used for subsequent images while monitoring the green, red, and blue colour values of subsequent images for determining whether adjustments to the colour coefficients 284 are in order.

In yet another aspect, colour balancing as provided by image calibration engine 280 employs dynamic colour balancing as follows. First, the overall picture temperature is calculated as is known in the art. Second, individual colour gain amplification (also referred to as colour coefficients 284) is calculated to obtain desired temperature.

## Claims

1. A method for providing barcode scanning for a target barcode (253) comprising:
receiving colour image values (252) for a captured image of the target barcode from at least one colour image sensor (250);
extracting luminosity values (262) for each pixel of the captured image from the colour image values (252) to define greyscale image values (264) corresponding to the colour image values (252);
providing the luminosity values (262) defining greyscale image values (264) to a greyscale barcode decoder (270) for subsequent processing thereof;
determining a set of coefficients (284) for calibrating the captured image in dependence upon one of:
predefined sensor sensitivity profiles (282), the predefined sensor sensitivity profiles (282) for defining spectral sensitivity values for the colour image sensor (250) for a range of predetermined wavelengths; and
colour characteristics of the captured image; and
applying the set of coefficients (284) to obtain calibrated image values (286) such as to provide (266) colour balancing of the captured image.

2. The method of claim 1 wherein the colour image values (252) comprise RGB image values, the method further comprising converting RGB image values to YUV values; and extracting the luminosity values (262) in dependence upon the YUV values.

3. The method of claim 1 wherein the colour image values (252) are selected from Bayer format colour image values, CMYK format colour image values, CMY format colour image values and HSC format colour image values.

4. The method of claim 3, wherein the colour image values (252) are converted to RGB image values and subsequently to YUV values for extracting the luminosity values (262) in dependence thereon.

5. The method of any preceding claim, wherein the target barcode is a greyscale barcode.

6. The method of any preceding claim, wherein determining the set of coefficients (284) in dependence upon predefined sensor sensitivity profiles (282) is independent of images captured via the colour image sensor (250).

7. The method of any preceding claim, further comprising determining the set of coefficients (284) for calibrating the captured image from the inverse value of the area under blue, red and green spectrum sensitivity curves (600) for the at least one colour image sensor (250).

8. A computing device (100) for providing barcode scanning for a target barcode comprising:
a processor (238);
at least one colour image sensor (250) for providing colour image values (252) for a captured image of the target barcode;
a greyscale barcode decoder (270) for decoding greyscale images;
a memory (224) coupled to the processor having instructions stored thereon for execution by the processor (238), the memory (224) comprising instructions for:
extracting luminosity values (262) for each pixel of the captured image from the colour image values (252) to define greyscale image values (264) corresponding to the colour image values (252);
providing the luminosity values (262) defining greyscale image values (264) to the greyscale barcode decoder (270) for subsequent processing thereof; and
determining a set of coefficients (284) for calibrating the captured image in dependence upon one of:
predefined sensor sensitivity profiles (282), the predefined sensor sensitivity profiles (282) for defining spectral sensitivity values for the colour image sensor (250) for a range of predetermined wavelengths; and
colour characteristics of the captured image; and
applying the set of coefficients (284) to obtain calibrated image values (286) such as to provide colour balancing of the captured image.

9. The computing device (100) of claim 8 wherein the colour image values (252) comprise RGB image values, and the memory (224) further comprises instructions for:
converting RGB image values to YUV values; and
extracting the luminosity values (262) in dependence upon the YUV values.

10. The computing device (100) of claim 8 wherein the colour image values (252) are selected Bayer format colour image values, CMYK format colour image values, CMY format colour image values and HSC format colour image values.

11. The computing device (100) of claim 8, wherein the memory further comprises instructions for converting colour image values (252) to RGB image values and subsequently to YUV values for extracting the luminosity values (262) in dependence thereon.

12. The computing device (100) of any of claims 8 to 11, wherein the target barcode is a greyscale barcode.

13. The computing device (100) of any of claims 8 to 12, wherein determining the set of coefficients (284) in dependence upon predefined sensor sensitivity profiles (282) is independent of images captured via the colour image sensor (250).

14. The computing device (100) of any of claims 8 to 13, wherein:
the computing device (100) is further operable to determine the set of coefficients (284) for calibrating the captured image from the inverse value of the area under blue, red and green spectrum sensitivity curves (600) for the at least one colour image sensor (250).

## Patentansprüche

1. Verfahren zum Strichcodescannen für einen Zielstrichcode (253), das umfasst:
Empfang von Farbbildwerten (252) für ein aufgenommenes Bild des Zielstrichcodes von mindestens einem Farbbildsensor (250);
Extraktion von Leuchtkraftwerten (262) für jedes Pixel des aufgenommenen Bildes aus den Farbbildwerten (252), um Schwarzweißbildwerte (264) entsprechend den Farbbildwerten (252) zu definieren;
Bereitstellung der Leuchtkraftwerte (262), die die Schwarzweißbildwerte (264) definieren, an einen Schwarzweißstrichcodedekodierer (270) zur anschließenden Verarbeitung davon;
Bestimmung eines Satzes von Koeffizienten (284) zur Kalibrierung des aufgenommenen Bildes in Abhängigkeit von einem der nachfolgenden Parameter:
vordefinierte Sensorempfindlichkeitsprofile (282), wobei die vordefinierten Sensorempfindlichkeitsprofile (282) spektrale Empfindlichkeitswerte für den Farbbildsensor (250) für einen Bereich von vorbestimmten Wellenlängen definieren; und
Farbmerkmale des aufgenommenen Bildes; und
Anwendung des Satzes von Koeffizienten (284), um kalibrierte Bildwerte (286) zu erhalten, um so eine Farbabstimmung des aufgenommenen Bildes zur Verfügung zu stellen (266).

2. Verfahren gemäß Anspruch 1, wobei der Farbbildwert (252) umfasst: RGB-Bildwerte, wobei das Verfahren weiterhin eine Wandlung von RGB-Bildwerten zu YUV-Werten umfasst; und eine Extraktion der Leuchtkraftwerte (262) in Abhängigkeit von den YUV-Werten.

3. Verfahren gemäß Anspruch 1, wobei die Farbbildwerte (252) aus Bayer-Format-Farbbildwerten, CMYK-Format-Farbbildwerten, CMY-Format-Farbbildwerten und HSC-Format-Farbbildwerten ausgewählt werden.

4. Verfahren gemäß Anspruch 3, wobei die Farbbildwerte (252) zu RGB-Bildwerten und anschließend zu YUV-Werten zur Extraktion der Leuchtkraftwerte (262) in Abhängigkeit davon gewandelt werden.

5. Verfahren gemäß einem der vorangehenden Ansprüche, wobei der Zielstrichcode ein Schwarzweißstrichcode ist.

6. Verfahren gemäß einem der vorangehenden Ansprüche, wobei eine Bestimmung des Satzes von Koeffizienten (284) in Abhängigkeit von vordefinierten Sensorempfindlichkeitsprofilen (282) nicht von Bildern abhängt, die über den Farbbildsensor (250) aufgenommen werden.

7. Verfahren gemäß einem der vorangehenden Ansprüche, das weiterhin umfasst:
eine Bestimmung des Satzes von Koeffizienten (284) zur Kalibrierung des aufgenommenen Bildes aus dem Kehrwert des Bereichs unter Empfindlichkeitskurven (600) des blauen, roten und grünen Spektrums für mindestens einen Farbbildsensor (250).

8. Rechner (100) zum Strichcodescannen für einen Zielstrichcode, der umfasst:
einen Prozessor (238);
mindestens einen Farbbildsensor (250) zur Bereitstellung von Farbbildwerten (252) für ein aufgenommenes Bild des Zielstrichcodes;
einen Schwarzweißstrichcodedekodierer (270) zur Dekodierung von Schwarzweißbildern;
einen Speicher (224), der an den Prozessor gekoppelt ist, in dem Anweisungen zur Ausführung durch den Prozessor (238) gespeichert sind, wobei der Speicher (224) Anweisungen umfasst zur:
Extraktion von Leuchtkraftwerten (262) für jedes Pixel des aufgenommenen Bildes aus den Farbbildwerten (252), um Schwarzweißbildwerte (264) entsprechend den Farbbildwerten (252) zu definieren;
Bereitstellung der Leuchtkraftwerte (262), die die Schwarzweißbildwerte (264) definieren, an einen Schwarzweißstrichcodedekodierer (270) zur anschließenden Verarbeitung davon; und
Bestimmung eines Satzes von Koeffizienten (284) zur Kalibrierung des aufgenommenen Bildes in Abhängigkeit von einem der nachfolgenden Parameter:
vordefinierte Sensorempfindlichkeitsprofile (282), wobei die vordefinierten Sensorempfindlichkeitsprofile (282) spektrale Empfindlichkeitswerte für den Farbbildsensor (250) für einen Bereich von vorbestimmten Wellenlängen definieren; und
Farbmerkmale des aufgenommenen Bildes; und
Anwendung des Satzes von Koeffizienten (284), um kalibrierte Bildwerte (286) zu erhalten, um so eine Farbabstimmung des aufgenommenen Bildes zur Verfügung zu stellen.

9. Rechner (100) gemäß Anspruch 8, wobei die Farbbildwerte (252) RGB-Bildwerte umfassen und der Speicher (224) weiterhin Anweisungen umfasst zur:
Wandlung von RGB-Bildwerten zu YUV-Werten; und
Extraktion der Leuchtkraftwerte (262) in Abhängigkeit der YUV-Werte.

10. Rechner (100) gemäß Anspruch 8, wobei die Farbbildwerte (252) ausgewählte Bayer-Format-Farbbildwerte, CMYK-Format-Farbbildwerte, CMY-Format-Farbbildwerte und HSC-Format-Farbbildwerte sind.

11. Rechner (100) gemäß Anspruch 8, wobei der Speicher weiterhin umfasst:
Anweisungen zur Wandlung von Farbbildwerten (252) zu RGB-Bildwerten und
anschließend zu YUV-Werten zur Extraktion der Leuchtkraftwerte (262) in Abhängigkeit davon.

12. Rechner (100) gemäß einem der Ansprüche 8 bis 11, wobei der Zielstrichcode ein Schwarzweißstrichcode ist.

13. Rechner (100) gemäß einem der Ansprüche 8 bis 12, wobei eine Bestimmung des Satzes von Koeffizienten (284) in Abhängigkeit von vordefinierten Sensorempfindlichkeitsprofilen (282) nicht von Bildern abhängt, die über den Farbbildsensor (250) aufgenommen werden.

14. Rechner (100) gemäß einem der Ansprüche 8 bis 13, wobei der Rechner (100) weiterhin betreibbar ist, um den Satz von Koeffizienten (284) zur Kalibrierung des aufgenommenen Bildes aus dem Kehrwert eines Bereiches unter Empfindlichkeitskurven (600) des blauen, roten und grünen Spektrums für mindestens einen Farbbildsensor (250) zu bestimmen.

## Revendications

1. Procédé pour fournir un scannage de code à barres pour un code à barres cible (253) comprenant :
la réception de valeurs d'image couleur (252) pour une image capturée du code à barres cible en provenance d'au moins un capteur d'image couleur (250) ;
l'extraction de valeurs de luminosité (262) pour chaque pixel de l'image capturée à partir des valeurs d'image couleur (252) pour définir des valeurs d'image à échelle de gris (264) correspondant aux valeurs d'image couleur (252) ;
la fourniture des valeurs de luminosité (262) définissant des valeurs d'image à échelle de gris (264) à un décodeur de code à barres à échelle de gris (270) pour un traitement ultérieur de celles-ci ;
la détermination d'un ensemble de coefficients (284) pour étalonner l'image capturée en fonction d'un parmi :
des profils de sensibilité de capteur prédéfinis (282), les profils de sensibilité de capteur prédéfinis (282) destinés à définir des valeurs de sensibilité spectrale pour le capteur d'image couleur (250) pour une plage de longueurs d'onde prédéterminées ; et
des caractéristiques de couleur de l'image capturée ; et
l'application de l'ensemble de coefficients (284) pour obtenir des valeurs d'image étalonnées (286) de façon à fournir (266) un équilibrage des couleurs de l'image capturée.

2. Procédé selon la revendication 1, dans lequel les valeurs d'image couleur (252) comprennent des valeurs d'image RVB, le procédé comprenant en outre la conversion de valeurs d'image RVB en valeurs YUV ; et l'extraction des valeurs de luminosité (262) en fonction des valeurs YUV.

3. Procédé selon la revendication 1, dans lequel les valeurs d'image couleur (252) sont sélectionnées parmi des valeurs d'image couleur au format Bayer, des valeurs d'image couleur au format CMJN, des valeurs d'image couleur au format CMJ et des valeurs d'image couleur au format HSC.

4. Procédé selon la revendication 3, dans lequel les valeurs d'image couleur (252) sont converties en valeurs d'image RVB et par la suite en valeurs YUV pour extraire les valeurs de luminosité (262) en fonction de celles-ci.

5. Procédé selon l'une quelconque des revendications précédentes, dans lequel le code à barres cible est un code à barres à échelle de gris.

6. Procédé selon l'une quelconque des revendications précédentes, dans lequel la détermination de l'ensemble de coefficients (284) en fonction de profils de sensibilité de capteur prédéfinis (282) est indépendante d'images capturées via le capteur d'image couleur (250).

7. Procédé selon l'une quelconque des revendications précédentes, comprenant en outre la détermination de l'ensemble de coefficients (284) pour étalonner l'image capturée à partir de la valeur inverse de la zone sous des courbes de sensibilité de spectre bleu, rouge et vert (600) pour le au moins un capteur d'image couleur (250).

8. Dispositif informatique (100) pour fournir un scannage de code à barres pour un code à barres cible comprenant :
un processeur (238) ;
au moins un capteur d'image couleur (250) pour fournir des valeurs d'image couleur (252) pour une image capturée du code à barres cible ;
un décodeur de code à barres à échelle de gris (270) pour décoder des images à échelle de gris ;
une mémoire (224) couplée au processeur sur laquelle sont stockées des instructions pour l'exécution par le processeur (238), la mémoire (224) comprenant des instructions pour :
extraire des valeurs de luminosité (262) pour chaque pixel de l'image capturée à partir des valeurs d'image couleur (252) pour définir des valeurs d'image à échelle de gris (264) correspondant aux valeurs d'image couleur (252) ;
fournir les valeurs de luminosité (262) définissant des valeurs d'image à échelle de gris (264) au décodeur de code à barres à échelle de gris (270) pour un traitement ultérieur de celles-ci ; et
déterminer un ensemble de coefficients (284) pour étalonner l'image capturée en fonction d'un parmi :
des profils de sensibilité de capteur prédéfinis (282), les profils de sensibilité de capteur prédéfinis (282) destinés à définir des valeurs de sensibilité spectrale pour le capteur d'image couleur (250) pour une plage de longueurs d'onde prédéterminées ; et
des caractéristiques de couleur de l'image capturée ; et
appliquer l'ensemble de coefficients (284) pour obtenir des valeurs d'image étalonnées (286) de façon à fournir un équilibrage des couleurs de l'image capturée.

9. Dispositif informatique (100) selon la revendication 8, dans lequel les valeurs d'image couleur (252) comprennent des valeurs d'image RVB, et la mémoire (224) comprend en outre des instructions pour :
convertir des valeurs d'image RVB en valeurs YUV ; et
extraire les valeurs de luminosité (262) en fonction des valeurs YUV.

10. Dispositif informatique (100) selon la revendication 8, dans lequel les valeurs d'image couleur (252) sont sélectionnées parmi des valeurs d'image couleur au format Bayer, des valeurs d'image couleur au format CMJN, des valeurs d'image couleur au format CMJ et des valeurs d'image couleur au format HSC.

11. Dispositif informatique (100) selon la revendication 8, dans lequel la mémoire comprend en outre des instructions pour convertir des valeurs d'image couleur (252) en valeurs d'image RVB et par la suite en valeurs YUV pour extraire les valeurs de luminosité (262) en fonction de celles-ci.

12. Dispositif informatique (100) selon l'une quelconque des revendications 8 à 11, dans lequel le code à barres cible est un code à barres à échelle de gris.

13. Dispositif informatique (100) selon l'une quelconque des revendications 8 à 12, dans lequel la détermination de l'ensemble de coefficients (284) en fonction de profils de sensibilité de capteur prédéfinis (282) est indépendante d'images capturées via le capteur d'image couleur (250).

14. Dispositif informatique (100) selon l'une quelconque des revendications 8 à 13, dans lequel :
le dispositif informatique (100) est en outre exploitable pour déterminer l'ensemble de coefficients (284) pour étalonner l'image capturée à partir de la valeur inverse de la zone sous des courbes de sensibilité de spectre bleu, rouge et vert (600) pour le au moins un capteur d'image couleur (250).
